# EUROPÄISCHE PATENTANMELDUNG

(11) **EP 0 776 005 A2**
(43) Veröffentlichungstag der Anmeldung: **28.05.1997**
(21) Anmeldenummer: 96117747.4
(22) Anmeldetag: 06.11.1996
(51) Int. Cl.: G11B 7/26

(54) **Vorrichtung zum Trocknen einer Lackschicht**

(30) Priorität: 21.11.1995 DE 19543354
(71) Anmelder: Balzers und Leybold Deutschland Holding Aktiengesellschaft, 63450 Hanau (DE)
(72) Erfinder: Hensel, Bernd, 65760 Eschborn (DE); Hofmann, Friedrich, 63654 Büdingen (DE); Koop, Hermann, Dr., 30952 Ronnenberg (DE); Reus, Manfred, 63579 Freigericht (DE)
(74) Vertreter: Schlagwein, Udo, Dipl.-Ing.

(57) **Zusammenfassung**

Eine Vorrichtung zum Trocknen einer Lackschicht auf einer zum Herstellen optisch auslesbarer, flacher Informationsträger, insbesondere Compact-Disks, dienenden Masterscheibe hat eine in ihrem Inneren mit einer Heizung (6) versehene Heizplatte (4, 5) zum Auflegen der jeweiligen Masterscheibe (7). Dadurch wird die Lackschicht sehr schnell und reproduzierbar getrocknet.

## Beschreibung

Die Erfindung betrifft eine Vorrichtung zum Trocknen einer Lackschicht auf einer zum Herstellen optisch auslesbarer, flacher Informationsträger, insbesondere Compact-Disks, dienenden Masterscheibe.

Solche Vorrichtungen werden derzeit für die Herstellung von Masterscheiben benutzt, mit denen anschließend beispielsweise Compact-Disks hergestellt werden. Bei der Lackschicht handelt es sich in erster Linie um Photoresistlack. Die bekannten Vorrichtungen sind ähnlich wie ein üblicher Backofen ausgebildet und führen der Masterscheibe die Wärme durch Konvektion zu. Hierzu arbeiten sie häufig mit Umluft. Der Vorgang des Trocknens wird allgemein als "backen" bezeichnet. Dabei werden üblicherweise mehrere Masterscheiben gleichzeitig in der Vorrichtung "gebacken".

Nachteilig bei den bekannten Vorrichtungen ist es, daß ein Trocknungsvorgang über 30 Minuten Zeit beansprucht, da die Lackschicht relativ empfindlich gegenüber zu hohen Temperaturen ist und deshalb nur mit verhältnismäßig niedrigen Temperaturen gearbeitet werden darf, um unzulässig heiße Temperatursträhnen zu vermeiden. Weiterhin sind die Backkonditionen nicht reproduzierbar, weil die Temperatur in der Vorrichtung durch unterschiedlich lange Öffnungszeiten oder durch eine unterschiedliche Zahl von eingelegten Masterscheiben unterschiedlich lang unter den gewünschten Sollwert sinken kann oder weil die Temperaturverteilung in der Vorrichtung ungleich ist, wodurch sich die getrockneten Lackschichten bei den nachfolgenden Prozessen, wie Belichten, Entwickeln und Metallisieren, unterschiedlich chemisch und physikalisch verhalten. Weiterhin führen die bisherigen, nicht reproduzierbaren Backprozesse zu unterschiedlichen Lackschichtdicken und damit zu nicht reproduzierbaren Spotgeometrien.

Der Erfindung liegt das Problem zugrunde, eine Vorrichtung der eingangs genannten Art zu entwickeln, mit der besonders rasch und unter reproduzierbaren Bedingungen Lackschichten auf einer Masterscheibe getrocknet werden können.

Dieses Problem wird erfindungsgemäß dadurch gelöst, daß die Vorrichtung eine in ihrem Inneren mit einer Heizung versehene Heizplatte zum Auflegen der jeweiligen Masterscheibe aufweist.

Eine solche Vorrichtung ist vergleichbar gestaltet wie ein elektrischer Herd. Da die Masterscheiben zum Trocknen ihrer Lackschicht flach auf die Heizplatte gelegt werden, wird schon nach wenigen Minuten exakt und definiert die erforderliche Backtemperatur im Lack erreicht, so daß der Trocknungsvorgang wesentlich schneller verläuft als bei den bisher bekannten, mit Konvektion arbeitenden Vorrichtungen. Physikalisch bietet die erfindungsgemäße Vorrichtung den Vorteil, daß beim Trocknen der Wärmegradient senkrecht von der Rückseite aus durch die Masterscheibe führt. Dadurch erwärmt sich die Lackschicht von innen nach außen, wodurch eine Hautbildung auf der Oberfläche der Lackschicht verhindert wird, welche das Freikommen von Lösungsmittel beim Trocknungsvorgang behindern würde.

Weitere Vorteile der erfindungsgemäßen Vorrichtung liegen darin, daß sie kostengünstig herstellbar ist, wenig Platz beansprucht, einen geringen Energiebedarf hat und einfach in ein On-Line-Fertigungssystem integriert werden kann.

Eine vorteilhafte Weiterbildung der Erfindung besteht darin, daß der Durchmesser der Heizplatte mindestens so groß wie der für die Information nutzbare Bereich der Masterscheibe, jedoch geringer als der Durchmesser der Masterscheibe ist. Durch diese Bemessung ist die Handhabung der Masterscheibe besonders einfach, weil bei der jeweils auf einer Heizplatte aufliegenden Masterscheibe der Außenrandbereich der Masterscheibe zum Greifen von beiden Seiten her frei bleibt.

Das Abkühlen der Masterscheiben kann auf übliche Weise auf einer dafür eingerichteten Station durch die Umgebungsluft erfolgen. Zur Beschleunigung des Kühlvorgangs ist es vorteilhaft, wenn gemäß einer Weiterbildung der Erfindung zusätzlich zur Heizplatte eine entsprechende, unbeheizte Kühlplatte vorgesehen ist. Dann kann man die Masterscheiben nach dem Trocknen auf die Kühlplatte legen, so daß sie sich sehr rasch auf Raumtemperatur abkühlen können. Natürlich ist darauf zu achten, daß auf keinen Fall der Taupunkt der Umgebungsluft unterschritten werden darf.

Oftmals haben Masterscheiben einen nach unten ragenden, mittigen Zentrierzapfen. Dieser stört nicht beim Auflegen und Trocknen auf der Heizplatte, wenn zentrisch in der Heizplatte und gegebenenfalls Kühlplatte eine zur Aufnahme eines Zentrierzapfens der Masterscheibe bemessene Bohrung vorgesehen ist.

Eine andere, vorteilhafte Weiterbildung der Erfindung besteht darin, daß die Bohrung durch einen demontierbaren, mit der Oberfläche der Heizplatte oder Kühlplatte bündig abschließenden Stopfen aus einem Material gleicher Wärmeleitfähigkeit und spezifischer Wärme wie die Heizplatte verschlossen ist. Durch einen solchen Stopfen wird sichergestellt, daß auf Heizplatten oder Kühlplatten mit einer Bohrung zur Aufnahme des Zentrierzapfens auch Masterscheiben ohne einen solchen Zentrierzapfen gleichmäßig erwärmt oder abgekühlt werden können.

Wenn man das Trocknen weiter beschleunigen will, dann kann man die Vorrichtung mit mehreren Heizplatten nebeneinander, hintereinander oder übereinander ausstatten. Besonders einfach ist die Vorrichtung gestaltet, wenn auf einem Karussell verteilt mehrere Heizplatten angeordnet sind.

Um Kontaminationen der Masterscheibe zu vermeiden, könnte man die Heizplatte mit Reinluft beaufschlagen. Das läßt sich mit besonders geringem Bauaufwand ausführen, wenn der Heizplatte eine mit Reinluft beaufschlagbare Haube zugeordnet ist. Eine solche Haube beeinfluß währen des Trocknungsvorganges zugleich den Wärmehaushalt in der Lackschicht positiv.

Konstruktiv besonders einfach ist die Vorrichtung gestaltet, wenn die Haube als Tunnel ausgebildet ist, in welche das Karussell mit einem zumindest eine Heizscheibe aufweisenden Bereich eingreift.

Die Erfindung läßt verschiedene Ausführungsformen zu. Zwei davon sind schematisch in der Zeichnung dargestellt und werden nachfolgend beschrieben. Diese zeigt in
- Fig.1: eine Seitenansicht eines Teilbereichs einer Vorrichtung nach der Erfindung,
- Fig.2: einen Schnitt durch einen mittleren Bereich einer Heizplatte nach der Erfindung,
- Fig.3: eine Draufsicht auf eine zweite Ausführungsform der Vorrichtung nach der Erfindung.

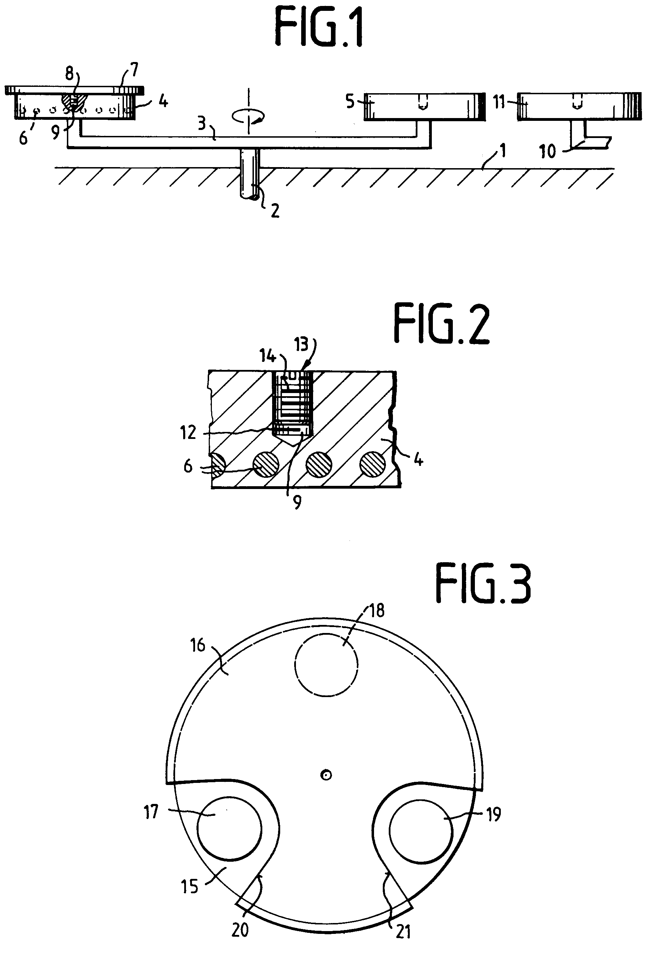

Die Figur 1 zeigt einen Arbeitstisch 1, in welchem mit einer Welle 2 drehbar ein Träger 3 gelagert ist. Dieser Träger 3 trägt an seinen beiden Enden jeweils eine Heizplatte 4, 5, welche ähnlich wie die Heizplatte eines üblichen Haushaltsherdes gestaltet ist und in ihrem Inneren jeweils eine Heizung 6 hat, bei der es sich um übliche, elektrische Heizwendeln handeln kann. Die Heizplatten 4, 5 bestehen vorzugsweise aus Edelstahl und weisen eine sehr glatte, polierte Oberfläche auf. Auf der Heizplatte 4 liegt eine Masterscheibe 7. Diese hat einen mittigen, nach unten gerichteten Zentrierzapfen 8, mit dem sie in eine entsprechende Bohrung 9 in der Heizplatte 4 eingreift. Der Durchmesser der Masterscheibe 7 ist etwas größer als der der Heizplatten 4 und 5. Dadurch kann sie mit einem nicht gezeigten üblichen Greifer ohne Schwierigkeiten auf die Heizplatten 4, 5 aufgelegt und von ihnen entfernt werden.

Seitlich neben dem Träger 3 ist ein Teilbereich eines weiteren Trägers 10 dargestellt, der eine Kühlplatte 11 trägt, die ähnlich wie die Heizplatten 4 und 5 gestaltet ist, jedoch keine elektrische Heizung hat.

Bei Benutzung der dargestellten Vorrichtung legt man eine belackte Masterscheibe 7 auf die Heizplatte 4. Während der Drehung des Trägers 3 trocknet die Lackschicht, indem Wärme von der Heizplatte 4 von unten nach oben durch die Masterscheibe 7 und der auf ihr aufgebrachten Lackschicht steigt. Beispielsweise nach einer 180°-Drehung kann die Masterscheibe 7 von der Heizplatte 4 entnommen und auf die Kühlplatte 11 gelegt werden, wo die Masterscheibe 7 rasch abkühlt.

Die Figur 2 zeigt gegenüber Figur 1 vergrößert einen Teilbereich der Heizplatte 4. Zu erkennen ist, daß die Bohrung 9 Innengewinde 12 hat, so daß von oben her ein Stopfen 13 mit Außengewinde 14 so weit in die Bohrung 9 geschraubt werden kann, daß er mit seiner Oberseite bündig mit der Oberfläche der Heizplatte 4 abschließt.

Bei der Ausführungsform nach Figur 3 ist eine Karussell 15 unterhalb einer Haube 16 angeordnet. Auf dem Karussell 15 sind bei diesem Ausführungsbeispiel drei Heizplatten 17, 18, 19 angeordnet. Die Haube 16 hat zwei Durchlässe 20, 21, welche so beabstandet sind, daß in jedem eine Heizplatte 17, 19 positionierbar ist. Dadurch wird es möglich, auf die Heizplatte 17 eine in Figur 1 gezeigte Masterscheibe 7 aufzulegen, von der Heizplatte 19 eine getrocknete Masterscheibe 7 zu entnehmen und danach das Karussell 15 zu drehen, bis die Heizplatte 17 mit der aufgelegten Masterscheibe 7 zum Durchlaß 21 gelangt, so daß wiederum dort eine Masterscheibe 7 entnommen und im Durchlaß 20 eine neue Masterscheibe 7 aufgelegt werden kann.

Nicht dargestellt ist, daß die Haube 16 mit Reinluft beaufschlagt wird, damit es nicht zu einer Kontamination der zu trocknenden Lackschicht kommen kann.

### Bezugszeichenliste

- 1: Arbeitstisch
- 2: Welle
- 3: Träger
- 4: Heizplatte
- 5: Heizplatte
- 6: Heizung
- 7: Masterscheibe
- 8: Zentrierzapfen
- 9: Bohrung
- 10: Träger
- 11: Kühlplatte
- 12: Innengewinde
- 13: Stopfen
- 14: Außengewinde
- 15: Karussell
- 16: Haube
- 17: Heizplatte
- 18: Heizplatte
- 19: Heizplatte
- 20: Durchlaß
- 21: Durchlaß

## Patentansprüche

1. Vorrichtung zum Trocknen einer Lackschicht auf einer zum Herstellen optisch auslesbarer, flacher Informationsträger, insbesondere Compact-Disks, dienenden Masterscheibe, **dadurch gekennzeichnet**, daß sie eine in ihrem Inneren mit einer Heizung (6) versehene Heizplatte (4, 5; 17, 18, 19) zum Auflegen der jeweiligen Masterscheibe (7) aufweist.

2. Vorrichtung nach Anspruch 1 für kreisförmige Masterscheiben, **dadurch gekennzeichnet**, daß der Durchmesser der Heizplatte (4, 5; 17, 18, 19) mindestens so groß wie der für die Information nutzbare Bereich der Masterscheibe (7), jedoch geringer als der Durchmesser der Masterscheibe (7) ist.

3. Vorrichtung nach den Ansprüchen 1 oder 2, **dadurch gekennzeichnet**, daß zusätzlich zur Heizplatte (4, 5; 17, 18, 19) eine entsprechende, unbeheizte Kühlplatte (11) vorgesehen ist.

4. Vorrichtung nach zumindest einem der vorangehenden Ansprüche, **dadurch gekennzeichnet**, daß zentrisch in der Heizplatte (4, 5; 17, 18, 19) und gegebenenfalls Kühlplatte (11) ein zur Aufnahme eines Zentrierzapfens (8) der Masterscheibe bemessene Bohrung (9) vorgesehen ist.

5. Vorrichtung nach Anspruch 4, **dadurch gekennzeichnet**, daß die Bohrung (9) durch einen demontierbaren, mit der Oberfläche der Heizplatte (4, 5) oder Kühlplatte (11) bündig abschließenden Zentrierzapfen (8) aus einem Material gleicher Wärmeleitfähigkeit und spezifischer Wärme wie die Heizplatte (4, 5) bzw. Kühlplatte (11) verschlossen ist.

6. Vorrichtung nach zumindest einem der vorangehenden Ansprüche, **dadurch gekennzeichnet**, daß auf einem Karussell (15) verteilt mehrere Heizplatten (17, 18, 19) angeordnet sind.

7. Vorrichtung nach zumindest einem der vorangehenden Ansprüche, **dadurch gekennzeichnet**, daß der Heizplatte (17, 18, 19) eine mit Reinluft beaufschlagbare Haube (16) zugeordnet ist.

8. Vorrichtung nach den Ansprüchen 6 und 7, **dadurch gekennzeichnet**, daß die Haube (16) als Tunnel ausgebildet ist, in welche das Karussell (15) mit einem zumindest eine Heizscheibe (17, 18, 19) aufweisenden Bereich eingreift.
